# EUROPEAN PATENT SPECIFICATION

(11) **EP 3 163 145 B1**
(45) Date of publication and mention of the grant of the patent: **12.12.2018**
(21) Application number: 14895781.4
(22) Date of filing: 27.06.2014
(51) Int. Cl.: F16M 11/04, F16M 11/16

(54) **CONNECTION APPARATUS AND PAN-TILT-ZOOM DEVICE**
VERBINDUNGSVORRICHTUNG UND SCHWENK-NEIGE-ZOOMVORRICHTUNG
APPAREIL DE CONNEXION ET DISPOSITIF DE PANORAMIQUE-INCLINAISON-ZOOM

(43) Date of publication of application: 03.05.2017
(60) Divisional application: 18202452.1
(73) Proprietor: SZ DJI Osmo Technology Co., Ltd., Nanshan District, Shenzhen, Guangdong 518057 (CN)
(72) Inventor: PAN, Paul, Shenzhen Guangdong 518057 (CN); ZHAO, Yanchong, Shenzhen Guangdong 518057 (CN)
(74) Representative: Appelt, Christian W.
(86) International application number: PCT/CN2014/081056
(87) International publication number: WO 2015/196490

(56) References cited:
- EP-A1- 1 160 499
- EP-A2- 2 258 975
- AU-B2- 627 812
- CN-U- 202 733 358
- CN-Y- 200 983 065
- DE-A1-102008 007 341
- DE-A1-102011 013 101
- DE-U1- 20 002 859
- JP-A- 2002 327 893
- JP-U- S4 959 537
- US-A- 4 570 887
- US-A- 5 333 023
- US-A1- 2014 130 334
- US-B1- 7 185 862

## Description

### TECHNICAL FIELD

The present disclosure relates to imaging devices, and in particular to a connecting device and a gimbal apparatus.

### BACKGROUND OF THE DISCLOSURE

An imaging device can comprise a gimbal and an imaging device carried on the gimbal. A gimbal can carry the imaging device, adjust an attitude of the imaging device and stabilize the imaging device at an attitude. For instance, the gimbal can change a height and/or an orientation of the imaging device and maintain the imaging device at the changed attitude. The imaging device can be effectively stabilized by the gimbal to smooth an image capturing and effect a multi-angle image capturing. A gimbal can be compatible with various types of cameras and lenses.

In image capturing by a prior art gimbal, the gimbal is either fixedly connected with an onboard supporting device or a handheld supporting device. The user may have to prepare a plurality of sets of gimbal and supporting device to capture images in various scenes, which is inconvenient and not cost-effective.

AU 627 812 B2 describes a lockable guide unit, comprising a first and a second elongated member, said first member having a longitudinal in section dovetail shaped portion whereas the second member has a mating dovetail shaped groove such that said members may be slidably connected to each other by means of said dovetail shaped rib and groove, said second elongated member has a transverse recess extending from one long side of said member towards the opposite long side thereof whereas said first elongated member has one or several transverse recesses extending from one long side thereof and towards the opposite long side thereof, said first mentioned recess of said second elongated member and each of said recesses of the first elongated member having such a section that the recess of the second member when in register with one of the recesses of the first member will form with the latter recess an opening of circular section so as to receive a cylindrical body of a cylinder lock said recess of said first member communicating with a longitudinally extending recess located at a distance from the end of said recess of said first member via a slot of restricted width, said cylinder lock having a turnable, axially extending stud intended to pass through said slot whereas a projection extending radially from the end of said stud may pass through said slot when said stud is in one angular position but may not pass through said slot when said stud is in another angular position in which latter position said projection by contact with the walls between the transverse recess and the longitudinal recess of said first member prevents the withdrawal of the cylinder lock.

### SUMMARY OF THE DISCLOSURE

The present disclosure provides a connecting device according to claim 1 and a gimbal, enabling a releasable connection between the gimbal and various supporting devices in different scenes.

Embodiments of the present disclosure provide a connecting device which comprises a connecting member, a slider and a locking member.

The locking member comprises a limiting cylinder and a limiting button. The limiting button comprises a sliding portion and a transmission portion, and the limiting cylinder is provided with a receiving hole for receiving the transmission portion.

One end of the connecting member is provided with a fastening portion to be fitted with an external supporting device, and the other end of the connecting member is provided with a first sliding slot and a limiting slot for accommodating the limiting cylinder.

One end of the slider is provided with a second sliding slot slidably fitted with the first sliding slot and an accommodating hole for accommodating the limiting cylinder. A side wall of the slider is provided with a through hole which communicates with the accommodating hole and is configured to receive the transmission portion. The through hole guides a sliding of the received transmission portion.

The other end of the slider is provided with a locking portion for locking an external device.

The first sliding slot of the connecting member is a guide sliding slot formed by a first protrusion portion and a second protrusion portion which are disposed opposite to each other at the other end of the connecting member.

The second sliding slot of the slider is a sliding protrusion which fits with the guide sliding slot.

The device further comprises a clamping block and a clamping bolt;

A side wall of the connecting member is provided with a receiving recess which communicates with the first protrusion portion and is configured to receive the clamping block. A bolt hole is provided at a bottom of the receiving recess.

The clamping block is provided with a through hole which corresponds to the bolt hole, and the clamping bolt passes through the through hole and fits with the bolt hole.

One end of the clamping block comprises an abutting protrusion that abuts against the sliding protrusion of the slider.

In some embodiments, the device can further comprise an elastic member. One end of the elastic member can be disposed in the accommodating hole, and the other end of the elastic member can be connected with the limiting cylinder.

In some embodiments, the first sliding slot and the second sliding slot can be dovetail slots which are fitted with each other, or the first sliding slot and the second sliding slot can be T-slots which are fitted with each other.

In some embodiments, the fastening portion of the connecting member can be provided with a clamping hole. One side of the fastening portion can be provided with an opening which communicates with the clamping hole. The opening can be fastened by a screw.

Embodiments of the present disclosure further provide a gimbal apparatus which comprises a supporting device, a connecting device and an imaging adjusting device. The connecting device can comprise a connecting member, a slider and a locking member.

The locking member can comprise a limiting cylinder and a limiting button. The limiting button can comprise a sliding portion and a transmission portion, and the limiting cylinder can be provided with a receiving hole for receiving the transmission portion.

One end of the connecting member can be provided with a fastening portion to be fitted with an external supporting device, and the other end of the connecting member can be provided with a first sliding slot and a limiting slot for accommodating the limiting cylinder.

One end of the slider can be provided with a second sliding slot slidably fitted with the first sliding slot and an accommodating hole for accommodating the limiting cylinder. A side wall of the slider can be provided with a through hole which communicates with the accommodating hole and can be configured to receive the transmission portion. The through hole can guide a sliding of the received transmission portion.

The other end of the slider can be provided with a locking portion for locking an external device.

In some embodiments, the first sliding slot of the connecting member can be a guide sliding slot formed by a first protrusion portion and a second protrusion portion which are disposed opposite to each other at the other end of the connecting member.

The second sliding slot of the slider can be a sliding protrusion which fits with the guide sliding slot.

In some embodiments, the device can further comprise a clamping block and a clamping bolt;

A side wall of the connecting member can be provided with a receiving recess which communicates with the first protrusion portion and can be configured to receive the clamping block. A bolt hole can be provided at a bottom of the receiving recess.

The clamping block can be provided with a through hole which corresponds to the bolt hole, and the clamping bolt can pass through the through hole and fit with the bolt hole.

One end of the clamping block can comprise an abutting protrusion that can abut against the sliding protrusion of the slider.

In some embodiments, the device can further comprise an elastic member. One end of the elastic member can be disposed in the accommodating hole, and the other end of the elastic member can be connected with the limiting cylinder.

In some embodiments, the first sliding slot and the second sliding slot can be dovetail slots which are fitted with each other, or the first sliding slot and the second sliding slot can be T-slots which are fitted with each other.

In some embodiments, the fastening portion of the connecting member can be provided with a clamping hole. One side of the fastening portion can be provided with an opening which communicates with the clamping hole. The opening can be fastened by a screw.

In embodiments of the present disclosure, the utilization of dovetail slot, T-slot and limiting member enables quick disassembly and quick assembly of a gimbal, such that the gimbal can be rapidly switched among connections with various supporting devices which are used with aerial vehicles, handheld devices and vehicles. A guiding is implemented by structures such as a dovetail slot and a T-slot, and a direction of adjustment is determinate and an operation is easy.

### BRIEF DESCRIPTION OF THE DRAWINGS

**FIG.1** is a view showing a structure of a connecting device according to an embodiment of the present disclosure;
**FIG.2** is a sectional view of the connecting device in II-II direction according to an embodiment of the present disclosure;
**FIG.3** is a view showing a structure of a connecting member of the connecting device according to an embodiment of the present disclosure;
**FIG.4** is a view showing a structure of a slider of the connecting device according to an embodiment of the present disclosure;
**FIG.5** is a view showing a structure of a locking member of the connecting device according to an embodiment of the present disclosure;
**FIG.6** is a view showing a structure of a clamping block and a clamping bolt of the connecting device according to an embodiment of the present disclosure;
**FIG.7** is a view showing a structure of a gimbal apparatus according to an embodiment of the present disclosure.

### DETAILED DESCRIPTION OF THE DISCLOSURE

The present disclosure will be described in the following embodiments with reference to the drawings. It is apparent that embodiments as described are only some rather than all the embodiments of the present disclosure. It is intended that any variation or change made without departing from the disclosure is within the scope of the disclosure.

In some embodiments of the present disclosure, a quick assembly and a quick disassembly of a gimbal with an external supporting device can be effected by a fitting between sliding slots such as a dovetail slot and a T-slot, in combination with a locking member.

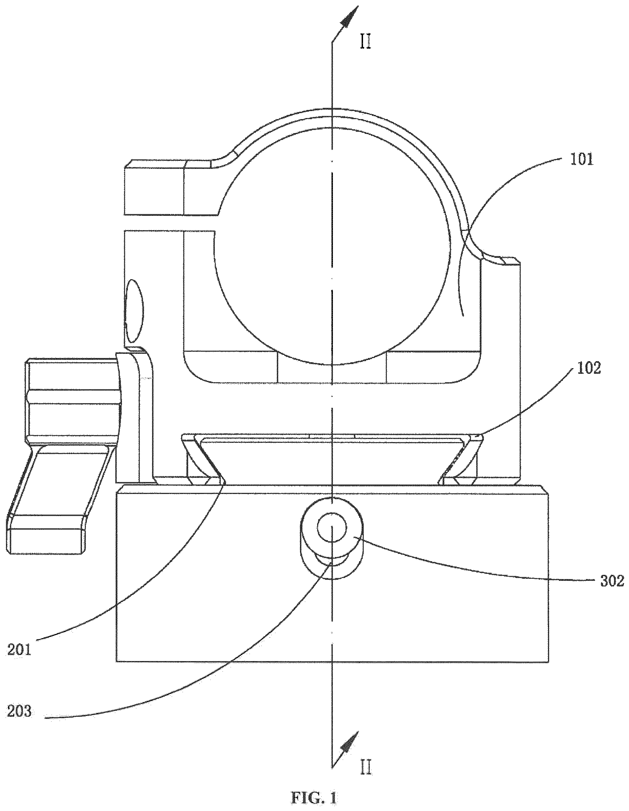

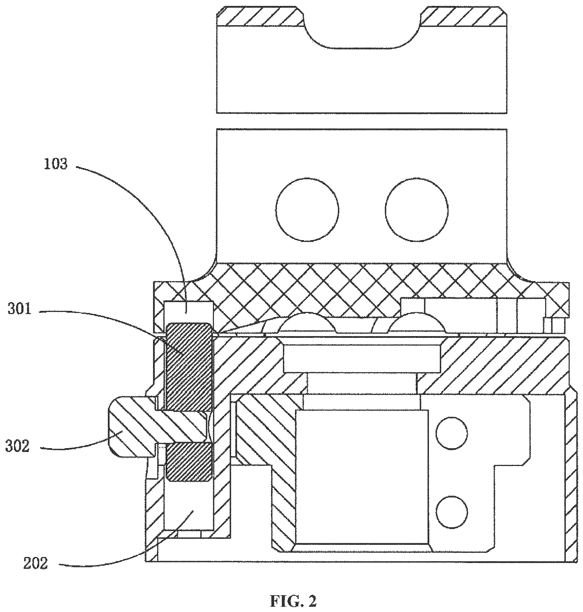

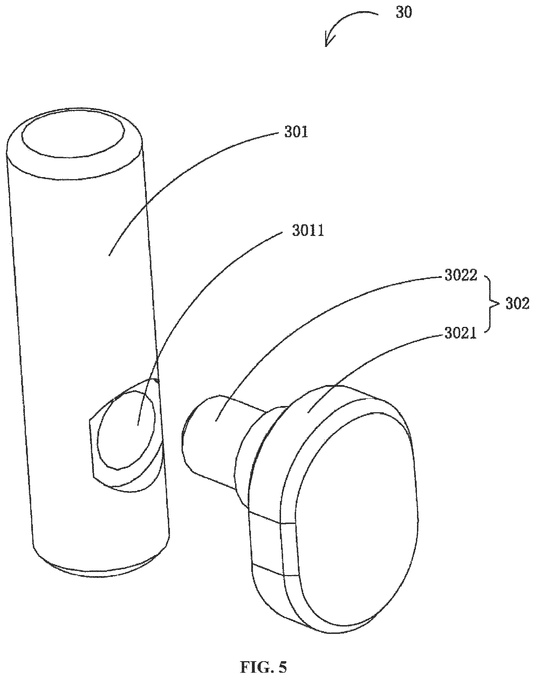

**FIGs.1** to **5** are views showing components of a connecting device according to an embodiment of the present disclosure. The connecting device of the present disclosure can be used in devices to be connected with an external supporting device, such as a gimbal. The connecting device comprises a connecting member **10,** a slider **20** and a locking member **30.** The connecting member **10** can be fixed to the external supporting device. The slider **20** can be connected with devices to be supported, such as a rotating shaft of a gimbal. The locking member **30** can restrict a relative position between the connecting member **10** and the slider **20** when the connecting member **10** is slidably fitted with the slider **20.**

The locking member **30** comprises a limiting cylinder **301** and a limiting button **302.** The limiting button **302** comprises a sliding portion **3021** and a transmission portion **3022.** The limiting cylinder **301** is provided with a receiving hole **3011** for receiving the transmission portion **3022.**

One end of the connecting member **10** is provided with a fastening portion **101** to be fitted with the external supporting device, and the other end of the connecting member **10** is provided with a first sliding slot **102** and a limiting slot **103** for accommodating the limiting cylinder **301.**

One end of the slider **20** is provided with a second sliding slot **201** slidably fitted with the first sliding slot **102** and an accommodating hole **202** for accommodating the limiting cylinder **301.** A side wall of the slider **20** is provided with a through hole 203 which communicates with the accommodating hole **202** and is configured to receive the transmission portion **3022.** The through hole **203** guides a sliding of the transmission portion **3022.**

The other end of the slider **20** is provided with a locking portion (not shown) for locking an external device.

As shown in **FIGs.1** to **5****,** the limiting cylinder **301** can be provided in a cylindrical shape. The limiting slot **103,** which is provided at the connecting member **10** and configured to accommodate the limiting cylinder **301,** can be a circular slot. The limiting slot **103** can accommodate a portion of the limiting cylinder **301.** The accommodating hole **202,** which is provided on the slider **20,** can be circular. A depth of the accommodating hole **202** can be greater than a length of the portion of the limiting cylinder 301 inserted into the circular accommodating hole **202,** such that the limiting cylinder **301** can slide in the accommodating hole **202.** Alternatively, the limiting cylinder **301** can be provided as various prisms in shape, and the limiting slot **103** can be accordingly provided as a slot having a corresponding prism shape.

The sliding portion **3021** and the transmission portion **3022** of the limiting button 302 can be provided perpendicularly to each other. The transmission portion **3022** can be provided as a cylinder, and the through hole **203** on the side wall of the slider **20** can be correspondingly an oval. A length of the oval-shaped through hole **203** can be greater than a basal diameter of an underside of the cylinder-shaped transmission portion **3022,** such that the transmission portion **3022** can slide in the oval-shaped through hole **203.** The receiving hole **3011** provided on the limiting cylinder **301** can be provided in a circular shape. The transmission portion **3022** of the limiting button **302** can pass through the through hole **203,** and then be inserted into the receiving hole **3011.** The limiting cylinder **301** can be drawn out from the limiting slot **103** of the connecting member **10** by sliding the transmission portion **3022** along the through hole **203,** such that the entire slider **20** can be slidably separated from connecting member **10.** Optionally, the transmission portion **3022** can be provided in various prism shape, and the through hole **203** on the side wall of the slider **20** and the receiving hole **3011** on the limiting cylinder **301** can be holes of corresponding shapes.

The connecting device can further comprise an elastic member (not shown). One end of the elastic member can be provided in the accommodating hole **202,** and the other end can be connected with the limiting cylinder **301.** In some instances, the elastic member can be a spring. After the limiting cylinder **301** sliding out of the limiting slot **103** of the connecting member **10,** the limiting cylinder **301** can be pushed back into the limiting slot **103** if a user releases the sliding portion **3021.** A drawing and restoring of the limiting cylinder **301** can be implemented by other means. For instance, the through hole **203** on the side wall of the slider 20 can be a T-shaped hole. The user can move the locking member **30** in the T-shaped hole to insert the limiting cylinder **301** into the limiting slot **103 of** the connecting member **10** or draw it out of the limiting slot **103.**

The locking member can prevent the slider **20** from sliding along a guiding direction of the sliding slot, such that a connection there between is reliable and stable.

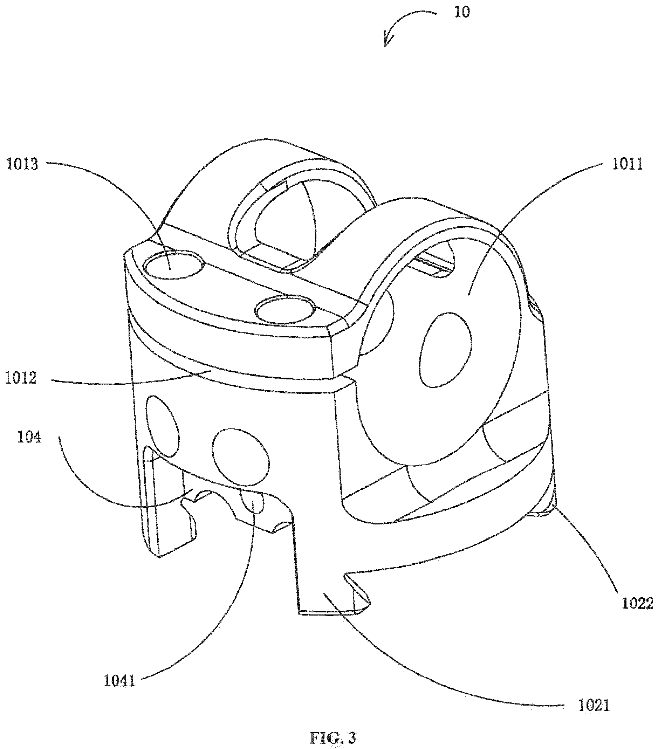

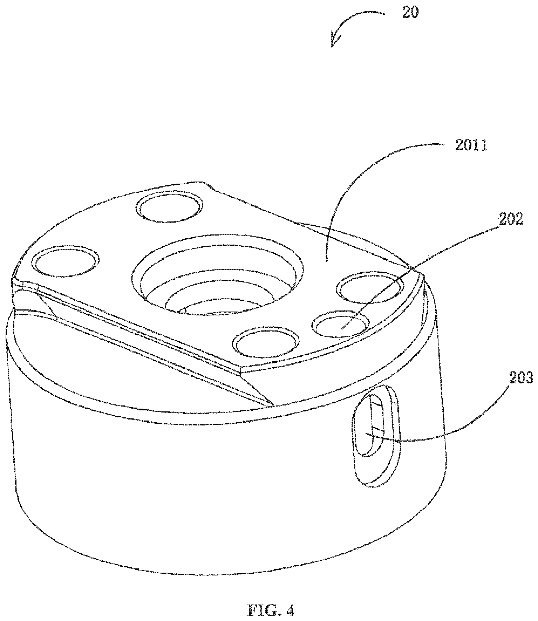

As shown in **FIGs. 3** and **4****,** the first sliding slot **102** of the connecting member **10** is a guide sliding slot formed by a first protrusion portion **1021** and a second protrusion portion **1022** which are disposed opposite to each other at the other end of the connecting member **10.** The second sliding slot **201** of the slider **20** is a sliding protrusion **2011** which fits with the guide sliding slot.

In some embodiments of the present disclosure, the first sliding slot **102** and the second sliding slot **201** are dovetail slots fitted with each other, as shown in **FIGs. 3** and **4****.** Alternatively, the first sliding slot **102** and the second sliding slot **201** can be T-slots fitted with each other.

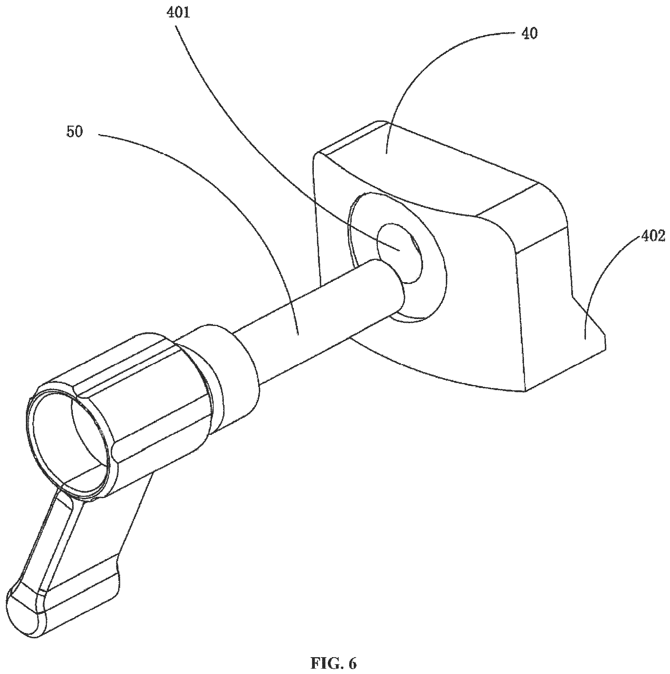

Referring to **FIG.6****,** the connecting device of an embodiment of the present disclosure comprises a clamping block **40** and a clamping bolt **50.** A side wall of the connecting member **10** is provided with a receiving recess **104** which communicates with the first protrusion portion **1021** and is configured to receive the clamping block **40.** A bolt hole **1041** is provided at a bottom of the receiving recess **104.** The clamping block **40** is provided with a through hole **401** which corresponds to the bolt hole **1041.** The clamping bolt **50** passes through the through hole **401** and fits with the bolt hole **1041.** One end of the clamping block **40** comprises an abutting protrusion **402** that abuts against the sliding protrusion **2011** of the slider **20.**

The abutting protrusion **402** is provided on an abutting surface of the clamping block **40,** on which the clamping block **40** contacts the bottom of the receiving recess **104** of the connecting member **10.** A distance between a vertex of the abutting protrusion **402** and the abutting surface can be a first distance. **FIG.3** illustrates a corner structure of the first protrusion portion **1021** which forms a slide rail of the first sliding slot **102.** A length between a vertex of an extension portion of the corner structure, which protrudes toward the second protrusion portion **1022,** and a bottom of the corner structure can be a second distance. The first distance can be slightly greater than the second distance, such that the abutting protrusion **402** can abut against the sliding protrusion **2011** of the slider **20.** In this way, the slider **20** can be fixed in the sliding slot **102** (which is formed by the first protrusion portion **1021** and the second protrusion portion **1022**), and a connection between the slider **20** and the sliding slot **102** is reliable and stable.

Referring to **FIG. 3****,** a structure of the fastening portion **101** of the connecting member **10** can include a clamping hole **1011.** A side of the fastening portion **101** can be provided with an opening **1012** which communicates with the clamping hole **1011.** The opening **1012** can be fastened by a screw.

The opening **1012** can be fastened by one or more screws. The fastening portion **101** can be provided with at least one screw through-hole **1013** that penetrates one side of the opening **1012.** The fastening portion **101** can be provided with a screw hole (not shown) at a position on the other side of the opening **1012** which corresponds to the screw through-hole **1013.** The screw can penetrate through the screw through-hole **1013** and fits with the bolt hole, so as to fasten the opening **1012.**

In embodiments of the present disclosure, the utilization of dovetail slot, T-slot and limiting member enables quick disassembly and quick assembly of a gimbal, such that the gimbal can be rapidly switched among connections with various supporting devices which are used with aerial vehicles, handheld devices and vehicles. In embodiments of the present disclosure, a guiding is implemented by structures such as a dovetail slot and a T-slot, and a direction of adjustment is determinate and an operation is easy. Furthermore, a locking mechanism having a clamping block is used to provide a reliable and stable connection, which is easy to operate.

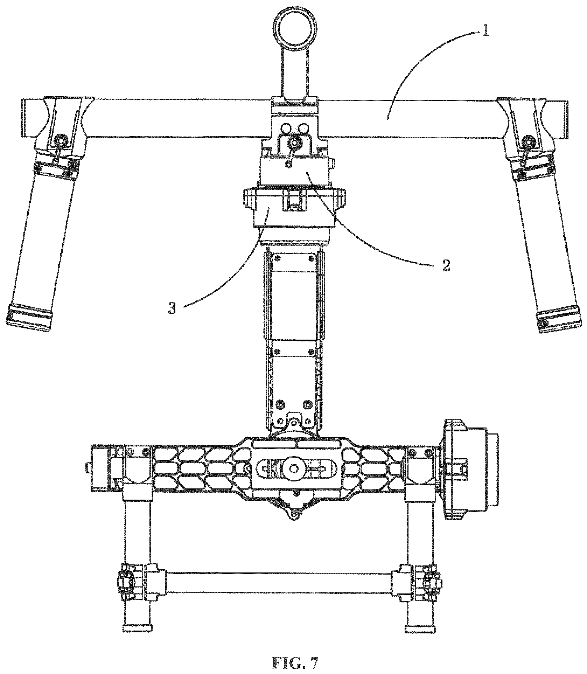

**FIG. 7** is a view showing a structure of a gimbal apparatus according to an embodiment of the present disclosure. In some embodiments of the present disclosure, the imaging adjusting device can be a tri-axial gimbal device, and the supporting device can be a handheld supporting device. In some instances, the apparatus can comprise a supporting device, a connecting device and an imaging adjusting device. The connecting device can comprise a connecting member, a slider and a locking member.

The locking member can comprise a limiting cylinder and a limiting button. The limiting button can comprise a sliding portion and a transmission portion, and the limiting cylinder can be provided with a receiving hole for receiving the transmission portion.

One end of the connecting member can be provided with a fastening portion to be fitted with the supporting device, and the other end of the connecting member can be provided with a first sliding slot and a limiting slot for accommodating the limiting cylinder.

One end of the slider can be provided with a second sliding slot slidably fitted with the first sliding slot and an accommodating hole for accommodating the limiting cylinder. A side wall of the slider can be provided with a through hole which communicates with the accommodating hole and is configured to receive the transmission portion. The through hole can guide a sliding of the transmission portion.

The other end of the slider can be provided with a locking portion for fixing the imaging adjusting device.

As shown in **FIG.7****,** the supporting device can comprise a supporting rod, three handles and corresponding connecting mechanisms. The fastening portion of the connecting device can be fitted with the supporting rod, such that the connecting device and the imaging adjusting device which is fixed to the connecting device can be connected to the supporting rod.

The fastening portion provided on the slider of the connecting device can be fitted with a rotation shaft of a motor which is provided at the imaging adjusting device, so as to connect the imaging adjusting device with the connecting device.

The imaging adjusting device can be attached to or detached from the supporting device by a sliding of the first sliding slot with the second sliding slot,.

In some embodiments, the first sliding slot of the connecting member can be a guide sliding slot formed by a first protrusion portion and a second protrusion portion which are disposed opposite to each other at the other end of the connecting member. The second sliding slot of the slider can be a sliding protrusion which fits with the sliding protrusion.

In some embodiments, the connecting device can further comprise a clamping block and a clamping bolt.

A side wall of the connecting member can be provided with a receiving recess which communicates with the first protrusion portion and is configured to receive the clamping block. A bolt hole can be provided at the bottom of the receiving recess.

The clamping block can be provided with a through hole which corresponds to the bolt hole. The clamping bolt can pass through the through hole and fits with the bolt hole.

One end of the clamping block can comprise an abutting protrusion 402 that can abut against the sliding protrusion of the slider.

In some embodiments, the connecting device can further comprise an elastic member. One end of the elastic member can be disposed in the accommodating hole, and the other end of the elastic member can be connected with the limiting cylinder.

In some embodiments, the first sliding slot and the second sliding slot of the connecting device can be dovetail slots which are fitted with each other. Alternatively, the first sliding slot and the second sliding slot of the connecting device can be T-slots which are fitted with each other.

In some embodiments, the fastening portion of the connecting member of the connecting device can be provided with a clamping hole. A side of the fastening portion can be provided with an opening which communicates with the clamping hole. The opening can be fastened by a screw.

The structural details of parts of the connecting device and the connection relation there between are provided in the embodiments which are described with reference to **FIGs.1** to **6****,** which are omitted here for conciseness.

In embodiments of the present disclosure, the utilization of dovetail slot, T-slot and limiting member enables quick disassembly and quick assembly of a gimbal, such that the gimbal can be rapidly switched among connections with various supporting devices which are used with aerial vehicles, handheld devices and vehicles. In embodiments of the present disclosure, a guiding is implemented by structures such as a dovetail slot and a T-slot, and a direction of adjustment is determinate and an operation is easy. Furthermore, a locking mechanism having a clamping block is used to provide a reliable and stable connection, which is easy to operate.

The foregoing disclosure is merely illustrative of the embodiments of the disclosure but not intended to limit the scope of the disclosure. Any equivalent modifications to a structure or process flow, which are made without departing from the claims, shall also fall into the scope of the disclosure.

## Claims

1. A connecting device, comprising:
a connecting member (10), a slider (20) and a locking member (30),
wherein the locking member (30) comprises a limiting cylinder (301) and a limiting button (302), the limiting button (302) comprises a sliding portion (3021) and a transmission portion (3022), and the limiting cylinder (301) is provided with a receiving hole (3011) for receiving the transmission portion (3022);
wherein one end of the connecting member (10) is provided with a fastening portion (101) to be fitted with an external supporting device, and the other end of the connecting member (10) is provided with a first sliding slot (102) and a limiting slot (103) for accommodating the limiting cylinder (301);
wherein one end of the slider (20) is provided with a second sliding slot (201) slidably fitted with the first sliding slot (102) and an accommodating hole (202) for accommodating the limiting cylinder (301), a side wall of the slider (20) is provided with a through hole (203) which communicates with the accommodating hole (202) and is configured to receive the transmission portion (3022), and the through hole (203) guides a sliding of the received transmission portion (3022);
wherein the other end of the slider (20) is provided with a locking portion for fixing an external device;
wherein the first sliding slot (102) of the connecting member (10) is a guide sliding slot formed by a first protrusion portion (1021) and a second protrusion portion (1022) which are disposed opposite to each other at the other end of the connecting member (10); and
wherein the second sliding slot (201) of the slider (20) is a sliding protrusion which fits with the guide sliding slot;
**characterized in that** the connecting device further comprises:
a clamping block (40); and a clamping bolt (50), wherein a side wall of the connecting member (10) is provided with a receiving recess (104) which communicates with the first protrusion portion and is configured to receive the clamping block (40), and a bolt hole (1041) is provided at a bottom of the receiving recess (104);
wherein the clamping block (40) is provided with a through hole which corresponds to the bolt hole (1041), and the clamping bolt (50) is configured to pass through the through hole and to fit with the bolt hole (1041); and
wherein one end of the clamping block (40) comprises an abutting protrusion (402) that is configured to abut against the sliding protrusion of the slider (20).

2. The connecting device of claim 1, wherein the abutting protrusion (402) is provided on an abutting surface of the clamping block (40) on which the clamping block (40) is to contact the bottom of the receiving recess (104) of the connecting member (10).

3. The connecting device of claim 2, wherein a distance between a vertex of the abutting protrusion (402) and the abutting surface is a first distance, wherein a length between a vertex of an extension portion of a corner structure of the first protrusion portion (1021) which protrudes toward the second protrusion portion (1022) and a bottom of the corner structure is a second distance, and wherein the first distance is greater than the second distance, such that the abutting protrusion (402) is configured to abut against the sliding protrusion (2011) of the slider (20).

4. The connecting device of any one of claims 1-3, further comprising an elastic member, wherein one end of the elastic member is disposed in the accommodating hole (202), and the other end of the elastic member is connected with the limiting cylinder (301).

5. The connecting device of claim 4, wherein the first sliding slot (102) and the second sliding slot (201) are dovetail slots which are fitted with each other, or the first sliding slot (102) and the second sliding slot (201) are T-slots which are fitted with each other.

6. The connecting device of claim 4, wherein the fastening portion (101) of the connecting member (10) is provided with a clamping hole (1011), one side of the fastening portion (101) is provided with an opening which communicates with the clamping hole (1011), and the opening is fastened by a screw.

7. A gimbal apparatus, comprising:
the connecting device of any one of the previous claims, the external supporting device and an imaging adjusting device as the external device.

## Patentansprüche

1. Verbindungsvorrichtung, umfassend:
ein Verbindungsglied (10), ein Gleitstück (20) und ein Sperrglied (30),
wobei das Sperrglied (30) einen Begrenzungszylinder (301) und einen Begrenzungsknopf (302) umfasst, wobei der Begrenzungsknopf (302) einen Gleitabschnitt (3021) und einen Übertragungsabschnitt (3022) umfasst und der Begrenzungszylinder (301) mit einem Aufnahmeloch (3011) zum Aufnehmen des Übertragungsabschnitts (3022) versehen ist;
wobei ein Ende des Verbindungsglieds (10) mit einem Befestigungsabschnitt (101) zum Passen an eine externe Stützvorrichtung versehen ist und das andere Ende des Verbindungsglieds (10) mit einem ersten Gleitschlitz (102) und einem Begrenzungsschlitz (103) zum Aufnehmen des Begrenzungszylinders (301) versehen ist;
wobei ein Ende des Gleitstücks (20) mit einem zweiten Gleitschlitz (201), der gleitbar an den ersten Gleitschlitz (102) gepasst ist, und einem Aufnahmeloch (202) zum Aufnehmen des Begrenzungszylinders (301) versehen ist, wobei eine Seitenwand des Gleitstücks (20) mit einem Durchgangsloch (203) versehen ist, das mit dem Aufnahmeloch (202) in Verbindung steht und zum Aufnehmen des Übertragungsabschnitts (3022) konfiguriert ist, und wobei das Durchgangsloch (203) ein Gleiten des aufgenommenen Übertragungsabschnitts (3022) führt;
wobei das andere Ende des Gleitstücks (20) mit einem Sperrabschnitt zum Befestigen einer externen Vorrichtung versehen ist;
wobei der erste Gleitschlitz (102) des Verbindungsglieds (10) ein Führungsgleitschlitz ist, der durch einen ersten Vorsprungsabschnitt (1021) und einen zweiten Vorsprungsabschnitt (1022) ausgebildet ist, die einander gegenüberliegend am anderen Ende des Verbindungsglieds (10) angeordnet sind; und
wobei der zweite Gleitschlitz (201) des Gleitstücks (20) ein Gleitvorsprung ist, der mit dem Führungsgleitschlitz zusammenpasst;
**dadurch gekennzeichnet, dass** die Verbindungsvorrichtung ferner umfasst:
einen Einspannblock (40); und einen Einspannbolzen (50), wobei eine Seitenwand des Verbindungsglieds (10) mit einer Aufnahmeaussparung (104) versehen ist, die mit dem ersten Vorsprungsabschnitt in Verbindung steht und zum Aufnehmen des Einspannblocks (40) versehen ist, und wobei ein Bolzenloch (1041) an einem Boden der Aufnahmeaussparung (104) vorgesehen ist;
wobei der Einspannblock (40) mit einem Durchgangsloch versehen ist, das dem Bolzenloch (1041) entspricht, und der Einspannbolzen (50) zum Durchlaufen des Durchgangslochs und zum Passen mit dem Bolzenloch (1041) konfiguriert ist; und
wobei ein Ende des Einspannblocks (40) einen Angrenzvorsprung (402) umfasst, der zum Angrenzen an den Gleitvorsprung des Gleitstücks (20) konfiguriert ist.

2. Verbindungsvorrichtung nach Anspruch 1, wobei der Angrenzvorsprung (402) auf einer Angrenzfläche des Einspannblocks (40) vorgesehen ist, an der der Einspannblock (40) den Boden der Aufnahmeaussparung (104) des Verbindungsglieds (10) berühren soll.

3. Verbindungsvorrichtung nach Anspruch 2, wobei ein Abstand zwischen einem Scheitel des Angrenzvorsprungs (402) und der Angrenzfläche ein erster Abstand ist, wobei eine Länge zwischen einem Scheitel eines Ausdehnungsabschnitts einer Eckstruktur des ersten Vorsprungsabschnitts (1021), der zum zweiten Vorsprungsabschnitt (1022) hin vorspringt, und einem Boden der Eckstruktur ein zweiter Abstand ist, und wobei der erste Abstand größer als der zweite Abstand ist, sodass der Angrenzvorsprung (402) zum Angrenzen an den Gleitvorsprung (2011) des Gleitstücks (20) konfiguriert ist.

4. Verbindungsvorrichtung nach einem der Ansprüche 1 bis 3, ferner umfassend ein elastisches Glied, wobei ein Ende des elastischen Glieds im Aufnahmeloch (202) angeordnet ist und das andere Ende des elastischen Glieds mit dem Begrenzungszylinder (301) verbunden ist.

5. Verbindungsvorrichtung nach Anspruch 4, wobei der erste Gleitschlitz (102) und der zweite Gleitschlitz (201) Schwalbenschwanzschlitze sind, die aneinandergepasst sind, oder wobei der erste Gleitschlitz (102) und der zweite Gleitschlitz (201) T-Schlitze sind, die aneinandergepasst sind.

6. Verbindungsvorrichtung nach Anspruch 4, wobei der Befestigungsabschnitt (101) des Verbindungsglieds (10) mit einem Einspannloch (1011) versehen ist, eine Seite des Befestigungsabschnitts (101) mit einer Öffnung versehen ist, die mit dem Einspannloch (1011) in Verbindung steht, und die Öffnung durch eine Schraube befestigt ist.

7. Kardanaufhängungsvorrichtung, umfassend:
die Verbindungsvorrichtung nach einem der vorhergehenden Ansprüche, die externe Stützvorrichtung und eine Bildgebungsanpassungsvorrichtung als die externe Vorrichtung.

## Revendications

1. Dispositif de connexion comprenant :
un élément de connexion (10), une glissière (20) et un élément de verrouillage (30),
dans lequel l'élément de verrouillage (30) comprend un cylindre de limitation (301) et un bouton de limitation (302), le bouton de limitation (302) comprend une partie de coulissement (3021) et une partie de transmission (3022), et le cylindre de limitation (301) est prévu avec un trou de réception (3011) pour recevoir la partie de transmission (3022) ;
dans lequel une extrémité de l'élément de connexion (10) est prévue avec une partie de fixation (101) pour être montée avec un dispositif de support externe, et l'autre extrémité de l'élément de connexion (10) est prévue avec une première fente de coulissement (102) et une fente de limitation (103) pour loger le cylindre de limitation (301) ;
dans lequel une extrémité de la glissière (20) est prévue avec une seconde fente de coulissement (201) montée, de manière coulissante avec la première fente de coulissement (102) et un trou de logement (202) pour loger le cylindre de limitation (301), une paroi latérale de la glissière (20) est prévue avec un trou débouchant (203) qui communique avec le trou de logement (202) et est configurée pour recevoir la partie de transmission (3022) et le trou débouchant (203) guide un coulissement de la partie de transmission (3022) reçue ;
dans lequel l'autre extrémité de la glissière (20) est prévue avec une partie de blocage pour fixer un dispositif externe ;
dans lequel la première fente de coulissement (102) de l'élément de connexion (10) est une fente de coulissement de guidage formée par une première partie de saillie (1021) et une seconde partie de saillie (1022) qui sont disposées à l'opposé l'une de l'autre au niveau de l'autre extrémité de l'élément de connexion (10) ; et
dans lequel la seconde fente de coulissement (201) de la glissière (20) est une saillie de coulissement qui correspond à la fente de coulissement de guidage ;
**caractérisé en ce que** le dispositif de connexion comprend en outre :
un bloc de serrage (40) ; et un boulon de serrage (50), dans lequel une paroi latérale de l'élément de connexion (10) est prévue avec un évidement de réception (104) qui communique avec la première partie de saillie et est configurée pour recevoir le bloc de serrage (40), et un trou de boulon (1041) est prévu au fond de l'évidement de réception (104) ;
dans lequel le bloc de serrage (40) est prévu avec un trou débouchant qui correspond au trou de boulon (1041) et le boulon de serrage (50) est configuré pour passer à travers le trou débouchant et pour correspondre au trou de boulon (1041) ; et
dans lequel une extrémité du bloc de serrage (40) comprend une saillie de butée (402) qui est configurée pour venir en butée contre la saillie de coulissement de la glissière (20).

2. Dispositif de connexion selon la revendication 1, dans lequel la saillie de butée (402) est prévue sur une surface de butée du bloc de serrage (40) sur laquelle on prévoit que le bloc de serrage (40) soit en contact avec le fond de l'évidement de réception (104) de l'élément de connexion (10).

3. Dispositif de connexion selon la revendication 2, dans lequel une distance entre un sommet de la saillie de butée (402) et la surface de butée est une première distance, dans lequel une longueur entre un sommet d'une partie d'extension d'une structure de coin de la première partie de saillie (1021) qui fait saillie vers la seconde partie de saillie (1022) et un fond de la structure de coin est une seconde distance, et dans lequel la première distance est supérieure à la seconde distance, de sorte que la saillie de butée (402) est configurée pour venir en butée contre la saillie de coulissement (2011) de la glissière (20).

4. Dispositif de connexion selon l'une quelconque des revendications 1 à 3, comprenant en outre un élément élastique, dans lequel une extrémité de l'élément élastique est disposée dans le trou de logement (202), et l'autre extrémité de l'élément élastique est raccordée avec le cylindre de limitation (301).

5. Dispositif de connexion selon la revendication 4, dans lequel la première fente de coulissement (102) et la seconde fente de coulissement (201) sont des fentes de queue d'aronde qui correspondent entre elles, ou la première fente de coulissement (102) et la seconde fente de coulissement (201) sont des fentes en forme de T qui correspondent les unes aux autres.

6. Dispositif de connexion selon la revendication 4, dans lequel la partie de fixation (101) de l'élément de connexion (10) est prévue avec un trou de serrage (1011), un côté de la partie de fixation (101) est prévu avec une ouverture qui communique avec le trou de serrage (1011), et l'ouverture est fixée par une vis.

7. Appareil à cardan comprenant :
le dispositif de connexion selon l'une quelconque des revendications précédentes, le dispositif de support externe et un dispositif d'ajustement d'image en tant que dispositif externe.
